# EUROPEAN PATENT APPLICATION

(11) **EP 4 443 818 A1**
(43) Date of publication of application: **09.10.2024**
(21) Application number: 23845484.7
(22) Date of filing: 24.07.2023
(51) Int. Cl.: H04L 9/40

(54) **TERMINAL APPARATUS, STATE CONTROL METHOD FOR TERMINAL APPARATUS, AND CONTROL SYSTEM FOR TERMINAL APPARATUS**

(30) Priority: 26.07.2022 CN 202210886215
(71) Applicant: Boe Technology Group Co., Ltd., Beijing 100015 (CN); Beijing BOE Technology Development Co., Ltd., Beijing 100176 (CN)
(72) Inventor: ZHAO, Junjie, Beijing 100176 (CN); SHEN, Hongxiang, Beijing 100176 (CN); FENG, Hongbo, Beijing 100176 (CN)
(74) Representative: Hoffmann Eitle
(86) International application number: PCT/CN2023/108829
(87) International publication number: WO 2024/022274

(57) **Abstract**

A terminal apparatus, comprising a shell, an image collection device, an audio device and a state switching device. The shell is provided with at least one mounting cavity, which is provided with at least one opening. The image collection device is arranged in the mounting cavity of the shell. The image collection device can switch the state thereof between a first state and a second state, wherein the first state is a state in which the image collection device is exposed by the opening of the shell, and the second state is a state in which the image collection device is shielded by the shell. The audio device is arranged in the mounting cavity of the shell. The audio device can switch the state thereof between a third state and a fourth state, wherein the third state is a state in which the audio device is exposed by the opening of the shell, and the fourth state is a state in which the audio device is shielded by the shell. The state switching device is configured to switch the state of the image collection device to the first state or the second state, and switch the state of the audio device to the third state or the fourth state.

## Description

This application claims priority to Chinese Patent Application No. 202210886215.2, filed on July 26, 2022, which is incorporated herein by reference in its entirety.

### TECHNICAL FIELD

The present disclosure relates to the field of electronic devices, and in particular, to a terminal apparatus, a state control method for a terminal apparatus, and a control system for a terminal apparatus.

### BACKGROUND

With the development of Internet of Things and mobile Internet technology, the types of terminal apparatuses have become more diverse, and the functions of terminal apparatuses have also been greatly improved. Generally, the terminal apparatuses can be wired or wirelessly connected the network, and can be remotely controlled, remotely managed, etc. by other devices with the help of a network server. As users become more aware of privacy protection, the terminal apparatuses are required to provide good privacy protection functions to well protect user privacy and improve user experience.

### SUMMARY

In an aspect, a terminal apparatus is provided. The terminal equipment includes a housing, an image acquisition device, an audio device and a state switching device. The housing is provided with at least one mounting cavity, and the mounting cavity has at least one opening.

The image acquisition device is disposed in the mounting cavity. The image acquisition device is capable of being switched between a first state and a second state, the first state is a state in which the image acquisition device is exposed by an opening of the housing, and the second state is a state in which the image acquisition device is shielded by the housing.

The audio device is disposed in the mounting cavity. The audio device is capable of being switched between a third state and a fourth state, the third state is a state in which the audio device is exposed by the opening, and the fourth state is a state in which the audio device is shielded by the housing.

The state switching device is configured to switch the image acquisition device to the first state or the second state, and to switch the audio device to the third state or the fourth state.

In some embodiments, the housing includes a base and a shielding housing, the at least one mounting cavity includes a first mounting cavity enclosed by the base and the shielding housing, and the at least one opening includes a first opening disposed in the shielding housing.

The terminal apparatus further includes a rotation housing, and the rotation housing is disposed in the first mounting cavity and rotationally connected to the base. The rotation housing is provided with a first sub-cavity, and the image acquisition device is fixed in the first sub-cavity; the rotation housing is provided therein with an image acquisition window; and the image acquisition window exposes a photosensitive surface of the image acquisition device.

The first state is a state in which the image acquisition window is exposed by the first opening, and the second state is a state in which the image acquisition window is shielded by the shielding housing. The state switching device includes a first driving member, and the first driving member is configured to control the rotation housing to rotate, so that the image acquisition window and the first opening are staggered or overlap.

In some embodiments, the audio device is fixed in the first sub-cavity, the rotation housing is further provided therein with an audio window, and the audio window exposes the audio device. The third state is a state in which the audio window is exposed by the first opening, and the fourth state is a state in which the audio window is shielded by the shielding housing. The state switching device further includes a second driving member, and the second driving member is configured to drive the rotation housing to rotate, so that the audio window and the first opening are staggered or overlap.

In some embodiments, the first driving member and the second driving member are the same driving member.

In some embodiments, the at least one mounting cavity includes a second mounting cavity provided in the base, and the audio device is disposed in the second mounting cavity; the base is provided therein with an audio window, and the audio window exposes the audio device; the at least one opening includes at least one second opening provided in the shielding housing; the third state is a state in which the audio window is exposed by the second opening; and the fourth state is a state in which the audio window is shielded by the housing.

In some embodiments, the base includes a foundation base and a support base disposed on the foundation base; the rotation housing is rotationally connected to the support base, and the support base is rotationally connected to the foundation base; the second mounting cavity includes a second sub-cavity provided in the foundation base, the audio device is disposed in the second sub-cavity, and the audio window is disposed on the foundation base; the state switching device includes a third driving member, and the third driving member is configured to drive the foundation base to rotate, so that the audio window and the second opening are staggered or overlap.

In some embodiments, the housing further includes a baffle disposed on the base. The state switching device includes a fourth driving member, and the fourth driving member is configured to drive the baffle to move or rotate, so that the audio window is opened or closed.

In some embodiments, the first driving member includes a first rotating shaft and a driving part that are rotatable relative to each other, the driving part is fixedly connected to the rotation housing, the first rotating shaft is fixedly connected to the base, and the driving part is capable of driving the rotation housing to rotate around the first rotating shaft.

In some embodiments, the driving part is fixed in the rotation housing; the rotation housing is provided therein with a first through hole, and the base is provided therein with a second through hole; an end of the first rotating shaft is connected to the driving part in the rotation housing, and another end of the first rotating shaft passes through the first through hole and is fixed in the second through hole; and the first rotating shaft has a clearance fit with the first through hole.

In some embodiments, the rotating shaft includes a first sub-shaft and a second sub-shaft that are connected to each other. An end of the first sub-shaft is connected to the driving part, another end of the first sub-shaft passes through the first through hole and is connected to the second sub-shaft, and the second sub-shaft is fixed in the second through hole; and sections of the first sub-shaft and the first through hole are approximately in a shape of a circle, and/or sections of the second sub-shaft and the second through hole are approximately in a shape of a polygon.

In some embodiments, the audio device includes a microphone, and a sound gain of the microphone in a direction pointing from the microphone to the audio window is greater than sound gains in other directions.

In some embodiments, the terminal apparatus further includes a second rotating shaft, the second rotating shaft is fixedly connected to the rotation housing, and the second rotating shaft is coaxially arranged with an axis of rotation of the rotation housing. The base is further provided therein with a limiting opening; the second rotating shaft is located in the limiting opening and is capable of rotating relative to the limiting opening; and the limiting opening is configured to prevent the second rotating shaft from moving in at least one direction parallel to a reference plane, the reference plane being a plane perpendicular to an axis of the second rotating shaft.

In some embodiments, the limiting opening is in a shape of a circle or a bow.

In some embodiments, the terminal apparatus further includes a protrusion block, and the protrusion block is disposed on the rotation housing. The base further includes a limiting part, and the limiting part cooperates with the protrusion block so that the rotation housing rotates within a preset angle range.

In some embodiments, the limiting part is a curved slideway, and the protrusion block is slidably disposed in the curved slideway.

In some embodiments, the state switching device further includes a processor coupled to the image acquisition device and the audio device; and the processor is configured to: control the audio device to be switched to the third state when the image acquisition device is in the first state, and control the audio device to be switched to the fourth state when the image acquisition device is in the second state.

In some embodiments, the terminal apparatus further includes a circuit board, and the processor is disposed on the circuit board. The circuit board includes at least one of a memory, a communication module or a power module.

In some embodiments, the image acquisition device and/or the audio device are disposed on the circuit board.

In some embodiments, the audio device includes a microphone and/or a speaker.

In some embodiments, in the first state, the image acquisition device works to capture external images, and in the second state, the image acquisition device stops working to stop capturing external images; and/or, in the third state, the audio device works to receive external sounds or transmit sounds to an outside, and in the fourth state, the audio device stops working to stop receiving external sounds or stop transmitting sounds to the outside.

In another aspect, a state control method for a terminal apparatus is provided. The state control method includes: obtaining state influence information of the terminal apparatus; determining whether the state influence information satisfies a preset condition; and based on the state influence information satisfying the preset condition, controlling an image acquisition device in the terminal apparatus to be switched from a first state to a second state, and/or controlling an audio device in the terminal apparatus to be switched from a third state to a fourth state.

In some embodiments, the state influence information includes: a first device list and a second device list, the first device list is used to record identifications of electronic devices associated with the terminal apparatus, the second device list is used to record an identification of an electronic device currently connected to a reference device, and the reference device includes at least one of a gateway, a router, a relay, or a server. The preset condition includes that at least one electronic device among the electronic devices associated with the terminal apparatus is connected to the reference device.

Determining whether the state influence information satisfies the preset condition includes: determining, according to the first device list and the second device list, that at least one electronic device among the electronic devices associated with the terminal apparatus is connected to the reference device.

In some embodiments, the state influence information includes: image information and/or sound information of an environment where the terminal apparatus is currently located. The preset condition includes that a user exists in the environment where the terminal apparatus is currently located.

Determining whether the state influence information satisfies the preset condition includes: determining, according to the image information and/or the sound information of the environment where the terminal apparatus is currently located, whether the image information includes image information of a user and/or the sound information includes sound information of a user; and if the image information includes image information of a user and/or the sound information includes sound information of a user, determining that a user exists in the environment where the terminal apparatus is currently located.

In some embodiments, the state influence information includes: image information of the environment where the terminal apparatus is currently located.

Controlling the image acquisition device in the terminal apparatus to be switched from the first state to the second state and/or controlling the audio device in the terminal apparatus to be switched from the third state to the fourth state includes: controlling the image acquisition device to be switched from the first state to the second state; based on receiving a user instruction within a first preset time, controlling the audio device to maintain the third state, the user instruction being an instruction of the user to instruct the terminal apparatus not to enable a sound masking function; and based on receiving no user instruction received within the first preset time, controlling the audio device to be switched from the third state to the fourth state.

In some embodiments, the state influence information includes: user information in the environment where the terminal apparatus is currently located, and the user information includes location information and/or identity information. The preset condition includes that the user information matches target information, and the target information includes target location information and/or preset identity information.

Determining whether the state influence information satisfies the preset condition includes: determining whether the location information is the same as the target location information and/or the identity information is the same as the preset identity information; and if the location information is the same as the target location information and/or the identity information is the same as the preset identity information, determining that the user information matches the target information.

In some embodiments, the state control method further includes: based on the state influence information not satisfying the preset condition, re-obtaining the state influence information of the terminal apparatus after an interval of a second preset time.

In yet another aspect, a control system for a terminal apparatus is provided, including the terminal apparatus as described in any of the above embodiments, a server and a mobile device. The server is coupled to the terminal apparatus, and the mobile device is coupled to the server.

In yet another aspect, a computer-readable storage medium is provided. The computer-readable storage medium has stored thereon computer program instructions that, when run on a processor, cause the processor to perform one or more steps of the state control method as described in any of the above embodiments.

In yet another aspect, a computer program is provided. When executed by a computer, the computer program causes the computer to perform one or more steps of the state control method as described in any of the above embodiments.

### BRIEF DESCRIPTION OF THE DRAWINGS

In order to describe technical solutions in the present disclosure more clearly, the accompanying drawings to be used in some embodiments of the present disclosure will be introduced briefly. However, the accompanying drawings to be described below are merely drawings of some embodiments of the present disclosure, and a person of ordinary skill in the art can obtain other drawings according to those drawings. In addition, the accompanying drawings in the following description may be regarded as schematic diagrams, but are not limitations on actual sizes of products, actual processes of methods and actual timings of signals involved in the embodiments of the present disclosure.
FIG. 1 is a structural diagram of a terminal apparatus, in accordance with some embodiments;
FIG. 2 is a structural diagram of a shielding housing, in accordance with some embodiments;
FIG. 3 is a structural diagram of a part of a rotation housing, in accordance with some embodiments;
FIG. 4 is a structural diagram of another part of a rotation housing, in accordance with some embodiments;
FIG. 5 is a structural diagram of a first driving component, in accordance with some embodiments;
FIG. 6 is a structural diagram of a circuit board, in accordance with some embodiments;
FIG. 7 is a diagram showing a structure of a combination of a rotation housing and a first driving component, in accordance with some embodiments;
FIG. 8 is an enlarged view of the region A in FIG. 1;
FIG. 9 is a sectional view taken along the line B-C in FIG. 1;
FIG. 10 is another sectional view taken along the line B-C in FIG. 1;
FIG. 11 is yet another sectional view taken along the line B-C in FIG. 1;
FIG. 12 is a flow diagram of a state control method, in accordance with some embodiments;
FIG. 13 is a flow diagram of a state control method, in accordance with some embodiments;
FIG. 14 is a flow diagram of a state control method, in accordance with some embodiments;
FIG. 15 is a box diagram of a first scenario of a state control method, in accordance with some embodiments;
FIG. 16 is a box diagram of a second scenario of a state control method, in accordance with some embodiments; and
FIG. 17 is a box diagram of a third scenario of a state control method, in accordance with some embodiments.

### DETAILED DESCRIPTION

The technical solutions in some embodiments of the present disclosure will be described clearly and completely with reference to the accompanying drawings. However, the described embodiments are merely some but not all of embodiments of the present disclosure. All other embodiments obtained on a basis of the embodiments of the present disclosure by a person of ordinary skill in the art shall be included in the protection scope of the present disclosure.

Unless the context requires otherwise, throughout the description and claims, the term "comprise" and other forms thereof such as the third-person singular form "comprises" and the present participle form "comprising" are construed as an open and inclusive meaning, i.e., "included, but not limited to". In the description of the specification, terms such as "one embodiment", "some embodiments", "exemplary embodiments", "example", "specific example" or "some examples" are intended to indicate that specific features, structures, materials or characteristics related to the embodiment(s) or example(s) are included in at least one embodiment or example of the present disclosure. Schematic representations of the above terms do not necessarily refer to the same embodiment(s) or example(s). In addition, specific features, structures, materials, or characteristics described herein may be included in any one or more embodiments or examples in any suitable manner.

Hereinafter, the terms such as "first" and "second" are used for descriptive purposes only, but are not to be construed as indicating or implying the relative importance or implicitly indicating the number of indicated technical features. Thus, features defined with "first" and "second" may explicitly or implicitly include one or more of the features. In the description of the embodiments of the present disclosure, the terms "a plurality of" "the plurality of" and "multiple" each mean two or more unless otherwise specified.

Some embodiments may be described using the terms "coupled" and "connected" and their derivatives. For example, the term "connected" may be used in the description of some embodiments to indicate that two or more components are in direct physical or electrical contact with each other. As another example, the term "connected" may be used in the description of some embodiments to indicate that two or more components are in direct physical or electrical contact. However, the term "coupled" or "communicatively coupled" may also mean that two or more components are not in direct contact with each other, but still cooperate or interact with each other. The embodiments disclosed herein are not necessarily limited to the context herein.

The phrase "at least one of A, B and C" has a same meaning as the phrase "at least one of A, B or C", and they both include the following combinations of A, B and C: only A, only B, only C, a combination of A and B, a combination of A and C, a combination of B and C, and a combination of A, B and C.

The phrase "A and/or B" includes the following three combinations: only A, only B, and a combination of A and B.

As used herein, the term "if" is optionally construed as "when" or "in a case where" or "in response to determining" or "in response to detecting", depending on the context. Similarly, depending on the context, the phrase "if it is determined that" or "if [a stated condition or event] is detected" is optionally construed as "in a case where it is determined that", "in response to determining that", "in a case where [the stated condition or event] is detected" or "in response to detecting [the stated condition or event]".

The phase "applicable to" or "configured to" used herein means an open and inclusive language, which does not exclude apparatuses that are applicable to or configured to perform additional tasks or steps.

In addition, the use of the phase "based on" means openness and inclusiveness, since a process, step, calculation or other action that is "based on" one or more of the stated conditions or values may, in practice, be based on additional conditions or values exceeding those stated.

The term such as "about," "substantially," or "approximately" as used herein includes a stated value and an average value within an acceptable range of deviation of a particular value determined by a person of ordinary skill in the art, considering measurement in question and errors associated with measurement of a particular quantity (i.e., limitations of a measurement system).

The terms "parallel", "perpendicular" and "equal" as used herein include the stated conditions and the conditions similar to the stated conditions, and the range of the similar conditions is within the acceptable deviation range, where the acceptable deviation range is determined by a person of ordinary skill in the art in consideration of the measurement in question and the error associated with the measurement of a specific quantity (i.e., the limitation of the measurement system). For example, the term "parallel" includes absolute parallelism and approximate parallelism, and an acceptable range of deviation of the approximate parallelism may be, for example, a deviation within 5°; the term "perpendicular" includes absolute perpendicularity and approximate perpendicularity, and an acceptable range of deviation of the approximate perpendicularity may also be, for example, a deviation within 5°; and the term "equal" includes absolute equality and approximate equality, and an acceptable range of deviation of the approximate equality may be, for example, that a difference between two equals is less than or equal to 5% of either of the two equals.

It will be understood that, when a layer or element is referred to as being on another layer or substrate, it may be that the layer or element is directly on the another layer or substrate, or it may be that intervening layer(s) exist between the layer or element and the another layer or substrate.

Exemplary embodiments are described herein with reference to sectional views and/or plan views as idealized exemplary drawings. In the accompanying drawings, thickness of layers and sizes of regions may be exaggerated for clarity. Variations in shape with respect to the drawings due to, for example, manufacturing technologies and/or tolerances may be envisaged. Therefore, the exemplary embodiments should not be construed as being limited to the shapes of the regions shown herein, but as including shape deviations due to, for example, manufacturing. For example, an etched region that is shown in a rectangle generally has a feature of being curved. Therefore, the regions shown in the accompanying drawings are schematic in nature, and their shapes are not intended to show actual shapes of the region in a device, and are not intended to limit the scope of the exemplary embodiments.

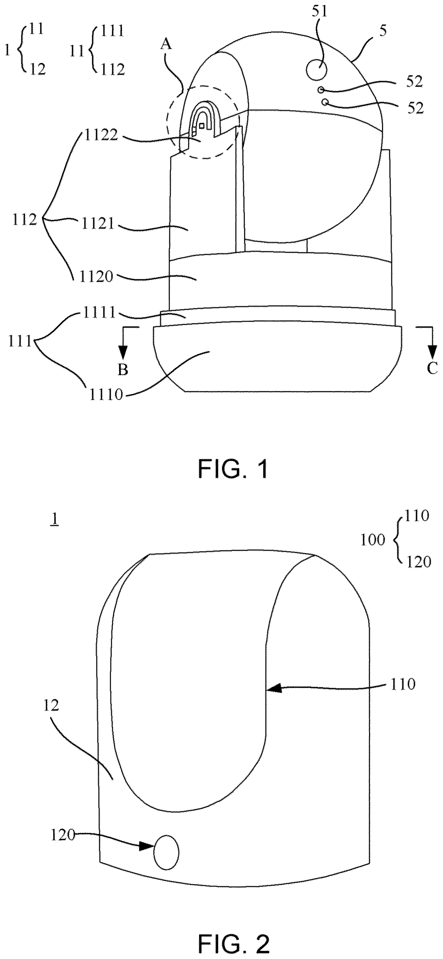

FIG. 1 is a structural diagram of a terminal apparatus, in accordance with some embodiments. FIG. 2 is a structural diagram of a shielding housing, in accordance with some embodiments.

Some embodiments of the present disclosure provide a terminal apparatus. Referring to FIGS. 1, 2 and 6, the terminal apparatus may include: a housing 1, an image acquisition device 2, an audio device 3 and a state switching device 4.

The housing 1 is provided with at least one mounting cavity, and the mounting cavity has at least one opening 100.

It will be noted that a shape of the opening 100 may be regular, for example, a circle or a regular polygon, or may be irregular.

In some examples, as shown in FIGS. 1, 2 and 6, the housing 1 may include a base 11 and a shielding housing 12. The at least one mounting cavity includes a first mounting cavity surrounded by the base 11 and the shielding housing 12, and the first mounting cavity may be configured to mount the image acquisition device 2 and/or the audio device 3. The at least one opening includes at least one first opening 110 disposed in the shielding housing 12, and the first opening 110 may be configured to expose the image acquisition device 2 and/or the audio device 3.

In some examples, as shown in FIGS. 1, 2 and 6, at least one mounting cavity further includes a second mounting cavity provided in the base 11, and the second mounting cavity may be configured to mount the audio device 3. The at least one opening 100 further includes at least one second opening 120 disposed in the shielding housing 12, and the second opening 120 may be configured to expose the audio device 3.

On this basis, as shown in FIG. 1, the base 11 may include a foundation base 111 and a support base 112.

In this case, the second mounting cavity may further include a second sub-cavity provided in the foundation base 111.

Referring to FIG. 1, the foundation base 111 may include a first cylinder 1110 and a second cylinder 1111 arranged coaxially. The second cylinder 1111 is disposed on the first cylinder 1110 and is retracted compared to the first cylinder 1110. That is, the diameter of the second cylinder 1111 is less than the diameter of the first cylinder 1110 to form a step-shaped structure.

It should be noted that the first cylinder 1110 may be, for example, a cylinder with rounded corners at bottom as shown in FIG. 1.

With continued reference to FIG. 1, the support base 112 includes a base body 1120 and at least two support plates 1121. The base body 1120 is disposed on the second cylinder 1111. The at least two support plates 1121 are fixedly disposed on a side of the base body 1120 away from the first cylinder 1110 and are disposed opposite to each other.

It will be noted that the support plates 1121 may be rectangular plates. A short edge of the rectangular plate can be fixed on the second cylinder 1111. Moreover, a thickness of an end of the rectangular plate close to the foundation base 111 is less than a thickness of an end of the rectangular plate away from the foundation base 111 (for example, a thickness of the rectangular plate gradually increases in a direction away from the foundation base 111).

The support base 112 further includes at least two ear plates 1122, one (for example, each) ear plate 1122 is fixed on a side of one (for example, each) support plate 1121 away from the foundation base 111.

For example, the ear plate 1122 is a three-quarter circular plate, and a straight edge of the ear plate 1122 is fixed on the support plate 1121.

It should be noted that a diameter of the ear plate 1122 may be less than the short edge of the support plate 1121. A thickness of the ear plate 1122 may be equal to the thickness of the end of the support plate 1121 away from the foundation base 111.

As shown in FIGS. 1 and 2, the shielding housing 12 is fixedly connected to the base 11, so as to protect and shield the electronic devices (such as the image acquisition device and the audio device) inside the shielding housing 12.

In some examples, the shielding housing 12 is disposed on the above-mentioned step-shaped structure. That is, an inner diameter of a bottom end of the shielding housing 12 close to the base 11 may be less than a diameter of the first cylinder 1110, and is greater than a diameter of the second cylinder 1111.

In other examples, the shielding housing 12 is fixedly connected to the base 11 by screws, and the shielding housing 12 completely covers the base 11. That is, the inner diameter of the bottom end of the shielding housing 12 close to the base 11 is greater than the diameter of the first cylinder 1110.

It should be noted that the shape of the shielding housing 12 is not unique, which may be a barrel-shaped columnar body or an irregular body. The embodiments of the present disclosure are not specifically limited thereto.

The image acquisition device 2 and the audio device 3 are both mounted inside the mounting cavity of the housing 1.

It should be noted that the image acquisition device 2 may include a camera. The audio device 3 may include a microphone and/or a speaker.

The image acquisition device 2 can switch between a first state and a second state, the first state is a state in which the image acquisition device 2 is exposed by the opening 100 of the housing 1, and the second state is a state in which the image acquisition device 2 is shielded by the housing 1.

In the first state, the image acquisition device 2 works to capture external images. In the second state, the image acquisition device 2 stops working to stop capturing external images.

That is to say, the first state may be a state in which the image acquisition device 2 can normally capture external images. The second state may be a state in which the image acquisition device 2 is shielded and cannot capture external images.

Furthermore, the audio device 3 can switch between a third state and a fourth state, the third state is a state in which the audio device 3 is exposed by the opening 100 of the housing 1, and the fourth state is a state in which the audio device 3 is shielded by the housing 1.

In the third state, the audio device 3 works to receive external sounds or transmit sounds to the outside. In the fourth state, the audio device 3 stops working to stop receiving external sounds or stop transmitting sounds to the outside.

That is to say, the third state may be a state in which the audio device 3 can normally receive external sounds or transmit sounds to the outside. The fourth state may be a state in which the audio device 3 is shielded and cannot receive external sounds or transmit sounds to the outside.

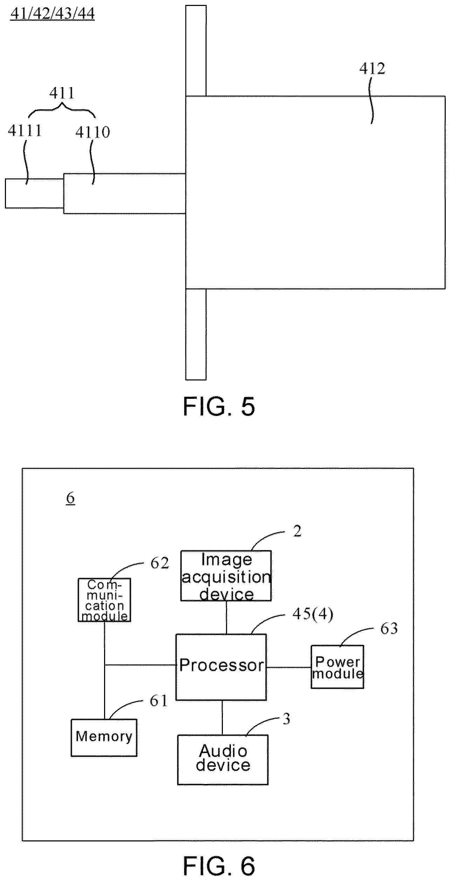

Referring to FIG. 6, the above-mentioned state switching device 4 is configured to switch the image acquisition device 2 to the first state or the second state, and switch the audio device 3 to the third state or the fourth state, so as to protect user privacy.

That is to say, through the state switching device 4, the image acquisition device 2 of the terminal apparatus can be switched between the second state and the first state, and the audio device 3 of the terminal apparatus can be switched between the fourth state and the third state. In this way, when the image acquisition device 2 is switched to the second state and the audio device 3 is switched to the fourth state, the user privacy may be well protected and the user experience may be improved.

In some embodiments, as shown in FIG. 1, the terminal apparatus further includes a rotation housing 5. The rotation housing 5 is disposed in the first mounting cavity and is rotationally connected to the base 11.

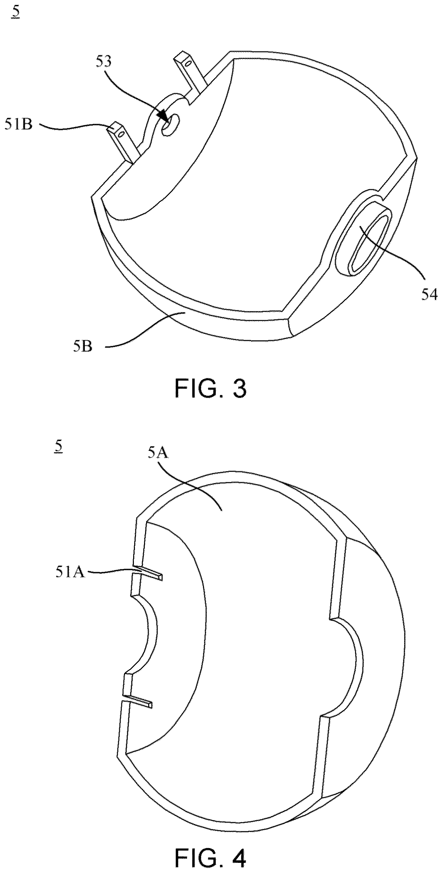

As shown in FIGS. 3, 4 and 7, the rotation housing 5 may include an upper rotation housing 5A and a lower rotation housing 5B that are detachably connected, thus facilitating the mounting of electronic components (such as the image acquisition device 2 and the audio device 3) inside the rotation housing 5.

On this basis, the upper rotation housing 5A and the lower rotation housing 5B may be stably connected through the cooperation of clamping and screwing. For example, the lower rotation housing 5B is provided with a plug-in part 51B, and the upper rotation housing 5A is provided with a plug-in slot 51A. The plug-in part 51B is plugged into the plug-in slot 51A to play a positioning and preliminary fixing role. Then, the upper rotation housing 5A and the lower rotation housing 5B are fixedly connected using screws.

Referring to FIGS. 1, 2, 3 and 4, the rotation housing 5 is provided with a first sub-cavity, and the image acquisition device 2 is fixed in the first sub-cavity. The first sub-cavity may be enclosed by the upper rotation housing 5A and the lower rotation housing 5B.

The rotation housing 5 is provided with an image acquisition window 51, and the image acquisition window 51 exposes a photosensitive surface of the image acquisition device 2 (referring to FIG. 6), so that the image acquisition device 2 (referring to FIG. 6) in the first sub-cavity can capture states of external images through the image acquisition window 51. The first opening 110 may be used to expose the image acquisition window 51.

In this case, the first state is a state in which the image acquisition window 51 is exposed by the first opening 110 of the shielding housing 12. That is, the image acquisition window 51 overlaps the first opening 110. The second state is a state in which the image acquisition window 51 is shielded by the shielding housing 12. That is, the image acquisition window 51 and the first opening 110 are staggered or the first opening 110 is shielded.

For example, referring to FIGS. 1, 5 and 6, the state switching device 4 includes a first driving member 41, and the first driving member 41 is configured to control a rotation of the rotation housing 5, so that the image acquisition window 51 and the first opening 110 (referring to FIG. 2) are staggered or overlap. The image acquisition device 2 may rotate synchronously with the rotation housing 5, and the relative positional relationship between the image acquisition device 2 and the rotation housing 5 remains unchanged, thus ensuring that the image acquisition window 51 always exposes the photosensitive surface of the image acquisition device 2.

It should be noted that the first driving member 41 may include at least one of an electric motor, a rotary motor, a hydraulic motor or a ball screw device.

The audio device 3 may be fixed in the first mounting cavity or the second mounting cavity.

In some embodiments, referring to FIGS. 1, 2 and 6, the audio device 3 is fixed in the first sub-cavity of the rotation housing 5; the rotation housing 5 is further provided with an audio window 52; and the audio window 52 exposes the audio device 3. The first opening 110 may further be used to expose the audio window 52.

In this case, the third state may be a state in which the audio window 52 is exposed by the first opening 110 of the shielding housing 12. That is, the audio window 52 overlaps the first opening 110. The fourth state may be a state in which the audio window 52 is shielded by the shielding housing 12. That is, the audio window 52 and the first opening 110 are staggered or the first opening 110 is shielded.

It should be noted that, in the case where the audio device 3 includes a microphone, a sound gain of the microphone in a direction pointing from the microphone to the audio window 52 is greater than sound gains in other directions. For example, the microphone includes a unidirectional microphone or a cardioid microphone, thus reducing the sound that the audio device 3 can receive in the fourth state and improve user privacy.

For example, the state switching device 4 further includes a second driving member 42. The second driving member 42 is configured to drive the rotation housing 5 to rotate, so that the audio window 52 and the first opening 110 are staggered or overlap. The audio device 3 may rotate synchronously with the rotation housing 5, and the relative positional relationship between the audio device 3 and the rotation housing 5 remains unchanged, thus ensuring that the audio window 52 always exposes the audio device 3.

It should be noted that the second driving member 42 may include at least one of an electric motor, a rotary motor, a hydraulic motor or a ball screw device. Moreover, the first driving member 41 and the second driving member 42 may be the same driving member. For example, the first driving member 41 and the second driving member 42 may be the same electric motor.

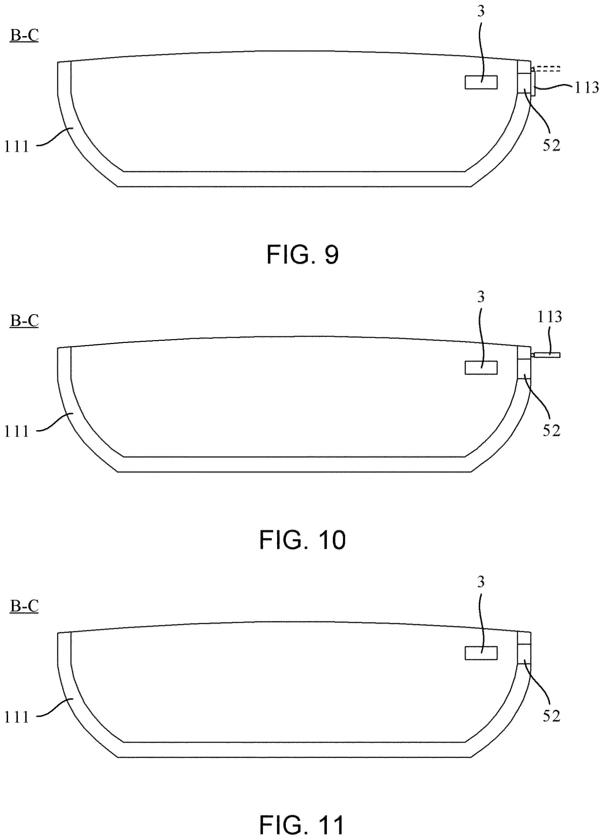

In some other embodiments, referring to FIGS. 9, 10 and 11, the audio device 3 is disposed in the second mounting cavity. The base 11 is provided therein with an audio window 52, and the audio window 52 exposes the audio device 3. The second opening 120 (referring to FIG. 2) may be used to expose the audio window 52.

In this case, the third state is a state in which the audio window 52 is exposed by the second opening 120 of the shielding housing 12. That is, the audio window 52 overlaps the second opening 120. The fourth state is a state in which the audio window 52 is shielded by the housing 1. That is, the audio window 52 and the second opening 120 or the second opening 120 is shielded.

For example, referring to FIG. 1, the rotation housing 5 is rotationally connected to the support base 112, and the support base 112 is rotationally connected to the foundation base 111.

As shown in FIGS. 1, 2 and 11, the second mounting cavity includes a second sub-cavity provided in the foundation base 111, the audio device 3 is disposed in the second sub-cavity, and the audio window 52 is disposed in the foundation base 111.

In this case, the state switching device 4 includes a third driving member 43, and the third driving member 43 is configured to drive the foundation base 111 to rotate, so that the audio window 52 and the second opening 120 are staggered or overlap. The audio device 3 may rotate synchronously with the foundation base 111, and the relative positional relationship between the audio device 3 and the foundation base 111 remains unchanged, thus ensuring that the audio window 52 always exposes the audio device 3.

It should be noted that the third driving member 43 may include at least one of an electric motor, a rotary motor, a hydraulic motor or a ball screw device.

As another example, as shown in FIGS. 9 and 10, the housing 1 further includes a baffle 113 disposed on the base 11, and the baffle 113 is movably connected to the base 11.

In the case where the audio device 3 is disposed in the second sub-cavity, the audio window 52 is disposed in the foundation base 111, and the baffle 113 is disposed on the foundation base 111.

In this case, the state switching device 4 includes a fourth driving member 44, and the fourth driving member 44 is configured to drive the baffle 113 to move or rotate to open or close the audio window 52.

It should be noted that the fourth driving member 44 may include at least one of an electric motor, a rotary motor, a hydraulic motor or a ball screw device.

A specific example is described below to introduce the rotation of the rotation housing 5 driven by the first driving member 41.

As shown in FIGS. 1 and 5, the first driving member 41 includes a first rotating shaft 411 and a driving part 412 that are rotatable relative to each other, the driving part 412 is fixedly connected to the rotation housing 5, and the first rotating shaft 411 is fixedly connected to the base 11. The driving part 412 can drive the rotation housing 5 to rotate around the first rotating shaft 411.

It should be noted that relative rotation can be understood as that: when the driving part 412 is fixed, the first rotating shaft 411 can rotate relative to the driving part 412; when the first rotating shaft 411 is fixed, the driving part 412 can rotate relative to the first rotating shaft 411.

For example, the first driving member 41 may be an electric motor; and the first rotating shaft 411 may be a rotating shaft of the electric motor, and the driving part 412 includes a housing of the electric motor. When the first rotating shaft 411 is fixed to the base 11, the driving part 412 can drive the rotation housing 5 to rotate around the first rotating shaft 411.

In some embodiments, referring to FIGS. 1 and 5, the driving part 412 may be fixed in the rotation housing 5.

As shown in FIGS. 3, 5, 7 and 8, the rotation housing 5 is provided therein with a first through hole 53, and the base 11 is provided therein with a second through hole 114. An end of the first rotating shaft 411 is connected to the driving part 412 in the rotation housing 5, and another end of the first rotating shaft 411 passes through the first through hole 53 and is fixed to the second through hole 114. The first rotating shaft 411 has a clearance fit with the first through hole 53, so that a gap exists between the first rotating shaft 411 and the first through hole 53, which avoids interference from the first rotating shaft 411 on the rotation of the rotation housing 5.

In some examples, referring to FIG. 5, the first rotating shaft 411 includes a first sub-shaft 4110 and a second sub-shaft 4111 that are connected to each other.

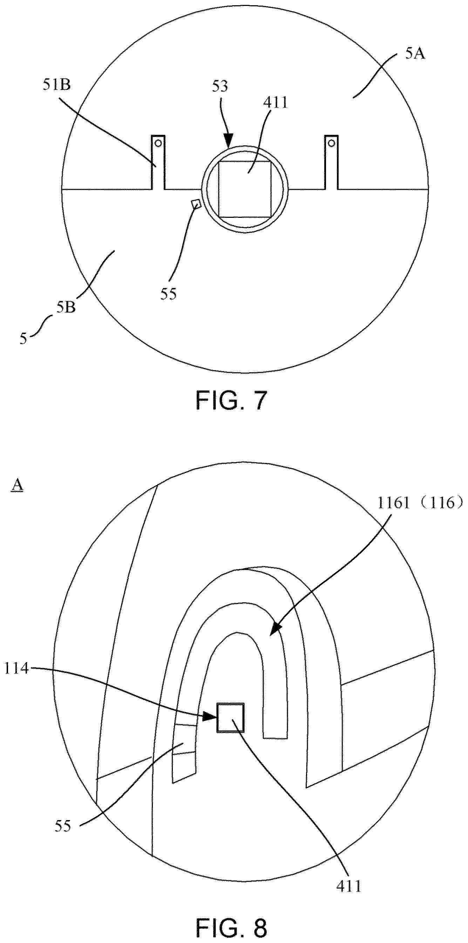

As shown in FIGS. 5 and 7, a portion of the first rotating shaft 411 passing through the first through hole 53 may be the first sub-shaft 4110. That is, an end of the first sub-shaft 4110 is connected to the driving part 412, and another end of the first sub-shaft 4110 is connected to the second sub-shaft 4111 passing through the first through hole 53. In this case, the first sub-shaft 4110 has a clearance fit with the first through hole 53, so that relative rotation may occur between the first sub-shaft 4110 and the rotation housing 5.

Here, sections (radial sections, which may also be referred to as cross sections) of the first sub-shaft 4110 and the first through hole 53 are approximately in a shape of a circle, and the process cost is low.

As shown in FIGS. 5 and 8, a portion of the first rotating shaft 411 fixed to the second through hole 114 may be the second sub-shaft 4111, that is, the second sub-shaft 4111 is fixed in the second through hole 114. In this case, a section (a radial section, which may also be referred to as a cross section) of the second sub-shaft 4111 may be different from a section (a radial section, which may also be referred to as a cross section) of the first sub-shaft 4110.

For example, the sections of the second sub-shaft 4111 and the second through hole 114 are approximately in a shape of a polygon, so as to prevent the second sub-shaft 4111 from rotating relative to the base 11 in the second through hole 114. For example, the polygon is any one of a quadrangle, a pentagon, and a hexagon.

Referring to FIG. 3, in order to improve the stability of rotation and avoid shaking of the rotation housing 5, the terminal apparatus further includes second rotating shaft(s) 54. The second rotating shaft(s) 54 are fixedly connected to the rotation housing 5, and the second rotating shaft(s) 54 are coaxially arranged with a rotation axis of the rotation housing 5. The second rotating shafts 54 are coaxially arranged with the first rotating shaft 411 (referring to FIG. 7), and are located on two opposite sides of the rotation housing 5.

It should be noted that the second rotating shaft 54 may be a hollow rotating shaft, thereby reducing weight. The second rotating shaft 54 may be fixedly connected to the rotation housing 5 through welding, hot melting, gluing or other fixed manners; or the second rotating shaft 54 and the rotation housing 5 may be integrally formed.

On this basis, the base 11 is further provided therein with a limiting opening. The second rotating shaft 54 is located in the limiting opening and may rotate relative to the limiting opening. The limiting opening is configured to prevent the second rotating shaft 54 from moving in at least one direction parallel to a reference plane, and the reference plane is a plane perpendicular to an axis of the second rotating shaft 54. In this way, the rotation stability of the rotation housing 5 may be improved, and the risk of the rotation housing 5 shaking during the rotation may be reduced.

It will be noted that the limiting opening is in a shape of a circle or a bow. For example, the limiting opening is in a shape of a semicircle (a type of a shape of a bow).

In some embodiments, referring to FIGS. 7 and 8, the terminal apparatus further includes a protrusion block 55. The protrusion block 55 is fixedly disposed on the rotation housing 5. The base 11 further includes a limiting part 116 that cooperates with the protrusion block 55, so that the rotation housing 5 rotates within a preset angle range.

It should be noted that the protrusion block 55 may be fixedly connected to the rotation housing 5 through welding, hot melting, gluing or other fixed manners; or, the protrusion block 55 and the rotation housing 5 may be integrally formed.

The preset angle range has two extreme values (i.e., a maximum value and a minimum value). When the image acquisition device 2 is disposed in the rotation housing 5, the minimum value may correspond to one of the first state and the second state, and the maximum value may correspond to another of the first state and the second state. For example, the minimum value corresponds to the first state, and the maximum value corresponds to the second state. As another example, the minimum value corresponds to the second state, and the maximum value corresponds to the first state.

For example, the limiting part 116 may be a curved slideway 1161, and the curved slideway 1161 is coaxially arranged with the second rotating shaft 54. The protrusion block 55 is slidably disposed in the curved slideway 1161.

A central angle corresponding to the curved slideway 1161 may be the maximum value. For example, the central angle of the curved slideway 1161 is in a range from 180° to 270° (such as 180°, 210°, 250°, 270°, etc.), and the preset angle range is from 0 to any one value of the range from 180° to 270° (such as 180°, 210°, 250°, 270°, etc.).

As another example, the limiting parts 116 may be some structures with blocking capability.

For example, when the diameter of the ear plate 1122 is less than the short edge of the rectangular plate, the protrusion block 55 may be fixedly arranged on the rotation housing 5 outside the ear plate 1122 (that is, opposite areas of the ear plate 1122 and the protrusion block 55 do not overlap). However, the ear plate 1122 rotates with the rotation housing 5 with a diameter less than the short edge of the rectangular plate. Therefore, when the protrusion block 55 rotates with the rotation housing 5, the protrusion block 55 may be in contact with short edges of the rectangular plates located on two sides of the ear plate 1122. In this case, the limiting part 116 may be the short edge of the rectangular plate.

In some embodiments, referring to FIG. 6, the state switching device 4 further includes a processor 45. The processor 45 is configured to, control the audio device 3 to be switched to the third state when the image acquisition device 2 is in the first state; and control the audio device 3 to be switched to the fourth state when the image acquisition device 2 is in the second state. Thus, the audio device 3 can automatically adjust and switch to a normal working mode or a privacy working mode.

The first driving member 41, the second driving member 42, the third driving member 43 and the fourth driving member 44 may all be coupled to the processor 45. The processor 45 may provide start signals and stop signals to the first driving member 41, the second driving member 42, the third driving member 43 and the fourth driving member 44. The start signal may include a forward rotation signal, a reverse rotation signal, etc.

In some examples, the state switching device 4 is configured to switch the image acquisition device 2 to the first state and switch the audio device 3 to the third state synchronously. Alternatively, the state switching device 4 is configured to switch the image acquisition device 2 to the second state and switch the audio device 3 to the fourth state synchronously.

In some other examples, the state switching device 4 is configured to switch the image acquisition device 2 to the first state and then switch the audio device 3 to the third state. Alternatively, the state switching device 4 is configured to switch the image acquisition device 2 to the second state and then switch the audio device 3 to the fourth state.

In some embodiments, referring to FIG. 6, the terminal apparatus further includes a circuit board 6.

In this case, the processor 45 may be disposed on the circuit board 6. The circuit board 6 may further include at least one of a memory 61, a communication module 62 or a power module 63.

In addition, the image acquisition device 2 and/or the audio device 3 is disposed on the circuit board 6.

For example, the circuit board 6 is disposed in the first sub-cavity of the rotation housing 5, and both the image acquisition device 2 and the audio device 3 are disposed on the circuit board 6.

For example, the circuit board 6 is disposed in the first sub-cavity of the rotation housing 5; the image acquisition device 2 is disposed on the circuit board 6; and the audio device 3 is disposed in the second sub-cavity of the foundation base 111, and is electrically connected to the circuit board 6 through wire(s).

For example, the circuit board 6 is disposed in the second sub-cavity of the foundation base 111; the audio device 3 is disposed on the circuit board 6; and the image acquisition device 2 is disposed in the first sub-cavity of the rotation housing 5, and is electrically connected to the circuit board 6 through wire(s).

The embodiments of the present disclosure further provides a control system for a terminal apparatus, including the terminal apparatus described in any of the above embodiments, a server and a mobile device. The server is coupled to the terminal apparatus, and the mobile device is coupled to the server.

It should be noted that, as for the coupling (that is, the control logic) between the terminal apparatus, the server and the mobile device, reference can be made to a state control method for a terminal apparatus below, and details will not be provided here in the embodiments of the present disclosure.

Some embodiments of the present disclosure further provide a state control method for a terminal apparatus. The terminal apparatus may be controlled locally, or may be controlled remotely via a network. The terminal apparatus may be the terminal apparatus mentioned above. The terminal apparatus may further include a type of apparatus or device that has at least two states and can switch states. For example, it may be a fingerprint lock with a working mode and a privacy protection mode, or a smart appliance involved in a smart home (such as a smart air conditioner or a smart refrigerator).

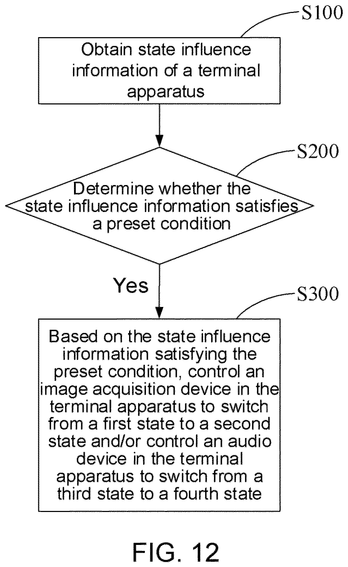

In some embodiments, referring to FIG. 12, the state control method for the terminal apparatus includes S100 to S300.

In S100, state influence information of the terminal apparatus is obtained.

In some embodiments, the state influence information includes a first device list and a second device list. The first device list is used to record an identification of electronic device(s) associated with the terminal apparatus. The second device list is used to record an identification of an electronic device currently connected to a reference device. The reference device includes at least one of a gateway, a router, a relay, or a server.

In some other embodiments, the state influence information includes image information and/or sound information of an environment where the terminal apparatus is currently located.

In yet some other embodiments, the state influence information includes user information of the environment where the terminal apparatus is currently located, and the user information includes location information and/or identity information.

In S200, whether the state influence information satisfies a preset condition is determined.

In the case where the state influence information includes the first device list and the second device list, the preset condition includes: at least one electronic device among the electronic device(s) associated with the terminal apparatus is connected to the reference device.

In this case, S200 includes: determining, according to the first device list and the second device list, that at least one electronic device among the electronic device(s) associated with the terminal apparatus is connected to the reference device.

In the case where the state influence information includes the image information and/or sound information of the environment where the terminal apparatus is currently located, the preset condition includes that a user exists in the environment where the terminal apparatus is currently located.

In this case, S200 includes: determining, according to the image information and/or sound information of the environment where the terminal apparatus is currently located, whether the image information includes image information of a use and/or the sound information includes sound information of a user; if the image information includes image information of a use and/or the sound information includes sound information of a user, determining that a user exists in the environment where the terminal apparatus is currently located.

In the case where the state influence information includes the user information in the environment where the terminal apparatus is currently located, the preset condition include that the user information matches target information; and the target information includes target location information and/or preset identity information.

In this case, S200 includes: determining whether the location information is the same as the target location information and/or the identity information is the same as the preset identity information; if the location information is the same as the target location information and/or the identity information is the same as the preset identity information, determining that the user information matches the target information. Based on the state influence information satisfying the preset condition, S300 is executed.

In S300, the image acquisition device in the terminal apparatus is controlled to be switched from the first state to the second state, and/or the audio device in the terminal apparatus is controlled to be switched from the third state to the fourth state.

In the case where the state influence information includes the image information of the environment where the terminal apparatus is currently located, the preset condition includes that a user exists in the environment where the terminal apparatus is currently located.

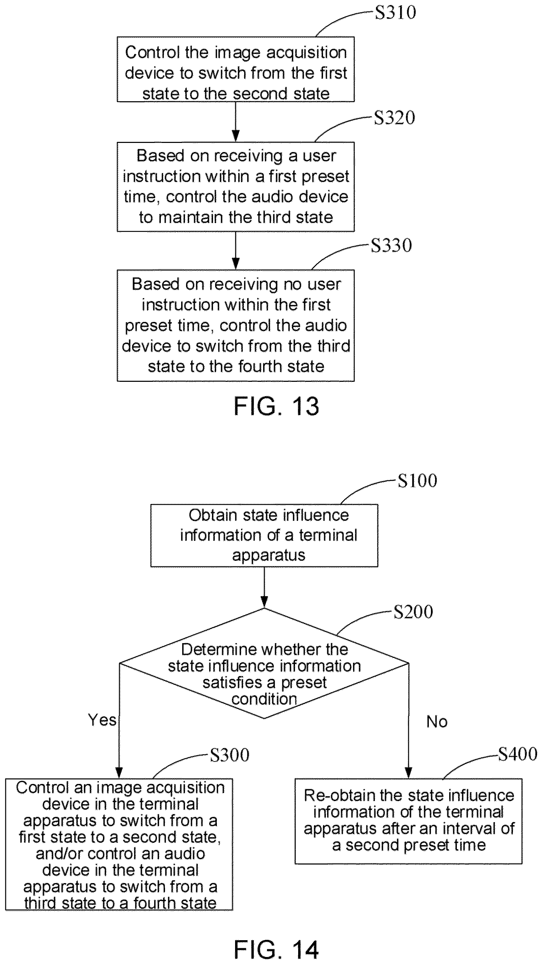

In this case, as shown in FIG. 13, S300 includes S310 to S330.

In S310, the image acquisition device is controlled to be switched from the first state to the second state.

In S320, the audio device is controlled to maintain the third state based on receiving a user instruction within a first preset time.

The user instruction is an instruction of a user to instruct the terminal apparatus not to enable a sound masking function.

It will be noted that, the first preset time may be set according to actual situations, which is not limited in the embodiments of the present disclosure.

In S330, the audio device is controlled to be switched from the third state to the fourth state based on receiving no user instruction within the first preset time.

Based on the state influence information not satisfying the preset condition, referring to FIG. 14, the state control method further includes S400.

In S400, the state influence information of the terminal apparatus is re-obtained after an interval of a second preset time.

It will be noted that, the second preset time may be set according to actual situations, which is not limited in the embodiments of the present disclosure.

It can be understood that the terminal apparatus is configured to have at least one electronic device associated therewith and at least one reference device. The electronic device associated with the terminal apparatus may control the terminal apparatus. In a possible implementation manner, the electronic device associated with the terminal apparatus may remotely control the terminal apparatus through a network server. It can be understood that there may be no control relationship between the electronic device associated with the terminal apparatus and the terminal apparatus.

An electronic device may become an electronic device associated with the terminal apparatus by being registered with the server. In addition, the electronic device may not be registered with the server, and may become an electronic device associated with the terminal apparatus through settings of a user (i.e., an operator) of the terminal apparatus.

For example, an electronic device is registered with the server as an electronic device associated with the terminal apparatus, and an image masking function and/or a sound masking function is added to the electronic device.

The electronic device may be a mobile device, a tablet computer, a desktop, a laptop, a handheld computer, a notebook computer, an ultra-mobile personal computer (UMPC), a netbook, a cellular phone, a personal digital assistant (PDA), an augmented reality (AR) / virtual reality (VR) device, etc.

The above-mentioned reference device may be a device that is physically or logically associated with the terminal apparatus. For example, the reference device may include one or more of a gateway, a router, a relay, and a server.

In some embodiments, the reference device may be a device that is physically adjacent to the terminal apparatus. For example, when the terminal apparatus is in a certain local area network, the reference device may be set as a gateway through which the terminal apparatus accesses the local area network.

In some other embodiments, the reference device may be a device that is logically adjacent to the terminal apparatus (e.g., in a network topology). For example, when the terminal apparatus is connected to a certain server through the network (adjacent to the server in the network topology) and may, for example, be controlled via the server, the reference device may be set as the server.

In yet some other embodiments, the reference device may also be set as the terminal apparatus itself.

The state control method for the terminal apparatus in the present disclosure will be described in detail below in conjunction with specific scenarios.

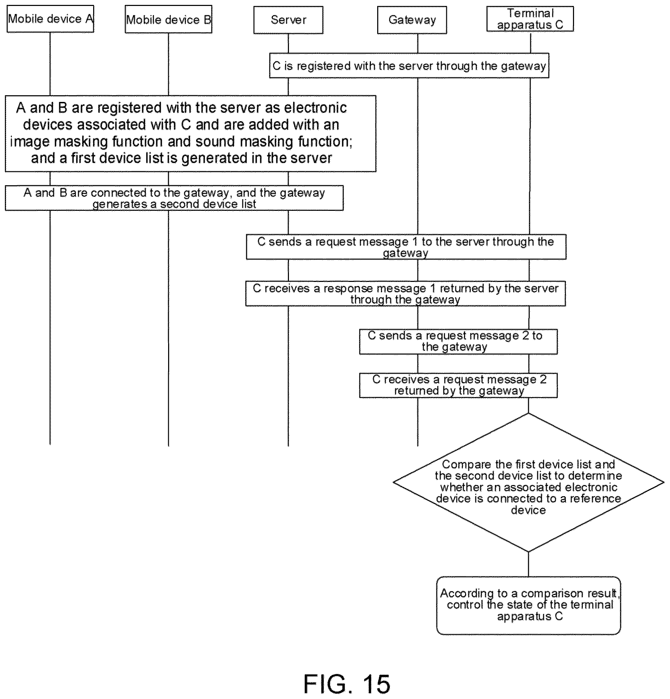

FIG. 15 is a box diagram of a first scenario of the state control method, in accordance with some embodiments. In an implementation manner of the first scenario, it is assumed that the terminal apparatus C is connected to the server via the gateway, the terminal apparatus C has electronic devices associated therewith, which are a mobile device A and a mobile device B, and the mobile device A and mobile device B are coupled to the server. Here, the reference device includes the server and the gateway.

It should be noted that FIG. 15 only shows two electronic devices associated with the terminal apparatus C, e.g., the mobile device A and the mobile device B. However, it can be understood that the terminal apparatus C may also have one or at least three associated electronic devices.

Referring to FIG. 15, the terminal apparatus C is registered with the server through the gateway. The server may store identification information of the terminal apparatus C. The identification information of the terminal apparatus C may include a device name, a media access control (MAC) address, etc.

The mobile device A and the mobile device B are registered with the server as electronic devices associated with the terminal apparatus C, and the image masking function and the sound masking function are added to the mobile device A and the mobile device B.

The server may store identification information of the mobile device A and the mobile device B, and generate the first device list including the identification information of the electronic devices associated with the terminal apparatus C according to the identification information of the mobile device A and the mobile device B. In the case where the first device list already exists, the server may add identification information of the mobile device A to the first device list.

It should be noted that identification information of a mobile device may include a device name, a MAC address, etc.

In some other embodiments, the first device list in the server may be directly created by a user of the terminal apparatus C. The user may set the electronic device(s) associated with the terminal apparatus in the first device list, including adding or deleting the electronic device(s) associated with the terminal apparatus.

When the mobile device A reaches the local area network where the terminal apparatus C is located, the mobile device A connects to the gateway. The gateway stores identification information of the electronic device(s) connected thereto (including the mobile device A), and generates the second device list according to the identification information of the electronic device(s) connected thereto. In this case, the second device list includes the identification information of the mobile device A.

The terminal apparatus C sends a request message 1 to the server through the gateway, so as to request the server to return the first device list.

The terminal apparatus C receives a response message 1 returned by the server through the gateway, and the response message 1 may carry the first device list. The first device list may include the identification information of the electronic device(s) (e.g., the mobile device A) associated with the terminal apparatus C.

The terminal apparatus C sends a request message 2 to the gateway, so as to request the gateway to return the second device list.

The terminal apparatus C receives a response message 2 returned by the gateway, and the response message 2 may carry the second device list. The second device list may include the identification information of the mobile device(s) (e.g., the mobile device A) connected to the gateway.

The terminal apparatus C compares the first device list with the second device list to determine whether an associated electronic device is connected to the reference device. For example, the terminal apparatus C may match identification information in the first device list with identification information in the second device list.

The state of the terminal apparatus C is controlled according to a comparison result.

In some embodiments, the terminal apparatus C determines whether the associated electronic device of the terminal apparatus C is connected to the gateway based on the comparison result. In the example shown in FIG. 15, since the mobile device A and the mobile device B are electronic devices associated with the terminal apparatus C, a determination result is "Yes".

In this case, an image input device of the terminal apparatus C is controlled to be switched to the second state, and a sound input device is controlled to be switched to the fourth state.

It can be understood that if other unregistered mobile device A and mobile device B reach the local area network where the terminal apparatus C is located, since the mobile device A and the mobile device B are not electronic devices associated with the terminal apparatus C, the determination result at this time is "No". The terminal apparatus C may maintain a previous state according to this.

In addition, the terminal apparatus C may repeatedly perform the above steps at certain time intervals. For example, the terminal apparatus C may also be informed to repeatedly perform the above steps when there is a change in the electronic device(s) connected to the gateway. The gateway may notify the terminal apparatus C of a change when there is a change in the electronic device(s) connected to the gateway. Therefore, the control of the terminal apparatus can respond more quickly to the change in the associated electronic device(s).

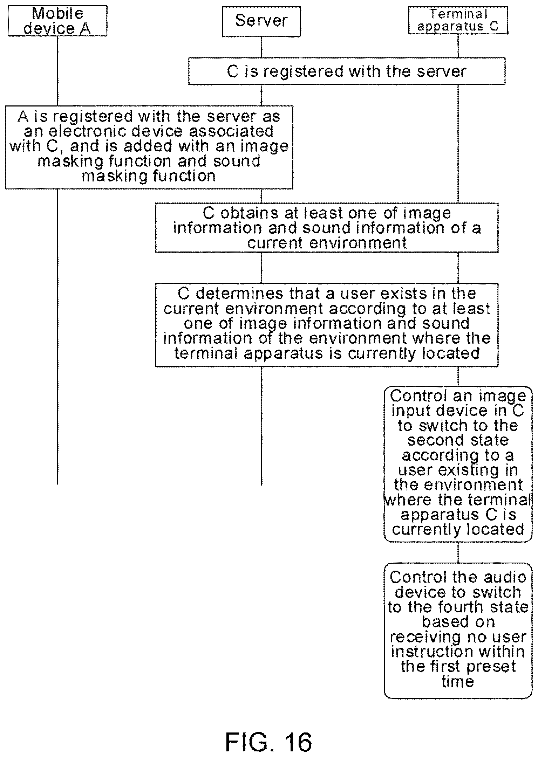

FIG. 16 is a box diagram of a second scenario of the state control method, in accordance with some embodiments. In an implementation manner of the second scenario, it is assumed that terminal apparatus C is coupled to the server, and the terminal apparatus C has an electronic device associated therewith, that is, a mobile device A. Here, the reference device includes the server.

It should be noted that FIG. 16 only shows one electronic device associated with the terminal apparatus C, e.g., the mobile device A. However, it can be understood that the terminal apparatus C can also have at least two associated electronic devices.

As shown in FIG. 16, the terminal apparatus C is registered with the server. The server may store identification information of the terminal apparatus C. The identification information of the terminal apparatus C may include a device name, a MAC address, etc.

The mobile device A is registered with the server as an electronic device associated with the terminal apparatus C, and an image masking function and a sound masking function are added in the mobile device A and the mobile device B.

The terminal apparatus C currently obtains at least one of image information and sound information of the environment where the terminal apparatus C is currently located.

According to the at least one of image information and sound information of the environment where the terminal apparatus C is currently located currently obtained by the current terminal apparatus C, whether the image information includes image information of a user and/or the sound information includes sound information of a user is determined.

If the image information includes image information of a user and/or the sound information includes sound information of a user, it is determined that a user exists in the environment where the terminal apparatus C is currently located.

According to that a user exists in the environment where the terminal apparatus C is currently located, the image input device of the terminal apparatus C is controlled to be switched to the second state.

Based on receiving a user instruction within the first preset time, the audio device is controlled to maintain the third state; and the user instruction is an instruction of a user to instruct the terminal apparatus not to enable the sound masking function.

Based on receiving no user instruction within the first preset time, the audio device is controlled to be switched to the fourth state.

If the image information includes no image information of a user and/or the sound information includes no sound information of a user, it is determined that no user exists in the environment where the terminal apparatus C is currently located, and the terminal apparatus C may maintain a previous state according to this.

In addition, the terminal apparatus C may repeatedly perform the above steps at certain time intervals.

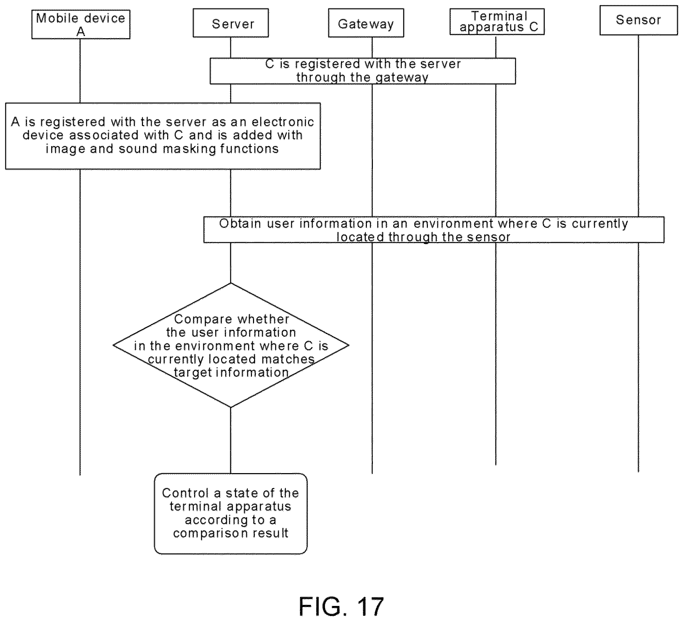

FIG. 17 is a box diagram of a third scenario of the state control method, in accordance with some embodiments. In an implementation manner of the three scenario, it is assumed that the terminal apparatus C is connected to the server via the gateway, and the terminal apparatus C has an electronic device associated therewith, i.e., the mobile device A. Here, the reference device includes the server and the gateway.

It should be noted that FIG. 17 shows only one electronic device associated with the terminal apparatus C, e.g., the mobile device A. However, it can be understood that the terminal apparatus C may also have at least two associated electronic devices.

As shown in FIG. 17, the terminal apparatus C is registered with the server through the gateway. The server may store identification information of the terminal apparatus C. The identification information of the terminal apparatus C may include a device name, a MAC address, etc.

The mobile device A is registered with the server as an electronic device associated with the terminal apparatus C, and an image masking function and a sound masking function are added to the mobile device A.

The user information of the environment where the terminal apparatus C is currently located is obtained. Here, the method of obtaining the user information of the environment where the terminal apparatus C is currently located is not unique.

For example, a sensor is coupled to the gateway, and location information of a user in the environment where the terminal apparatus C is currently located is obtained through the sensor.

In this case, it is determined whether the location information of the user in the environment where the terminal apparatus C is currently located matches target location information.

The state of the terminal apparatus C is controlled according to whether the location information of the user in the environment where the terminal apparatus C is currently located matches the target location information.

In the case where the location information of the user in the environment where the terminal apparatus C is currently located matches the target location information, the image input device of the terminal apparatus C is controlled to be switched to the second state, and the sound input device of the terminal apparatus C is controlled to be switched to the fourth state.

In the case where the location information of the environment where the terminal apparatus C is currently located does not match the target location information, the terminal apparatus C may maintain a previous state.

As another example, the terminal apparatus C acquires image(s) to obtain the location information and identity information of the user in the environment where the terminal apparatus C is currently located.

In this case, it is determined whether the location information and the identity information of the user in the environment where the terminal apparatus C is currently located match the target location information and the target identity information respectively.

The state of the terminal apparatus C is controlled according to whether the location information and the identity information of the user in the environment where the terminal apparatus C is currently located match the target location information and the target identity information respectively.

In the case where the location information and the identity information of the user in the environment where the terminal apparatus C is currently located match the target location information and the target identity information respectively, the image input device of the terminal apparatus C is controlled to be switched to the second state, and the sound input device of the terminal apparatus C is controlled to be switched to the fourth state.

In the case where there is at least one of that: the location information of the user in the environment where the terminal apparatus C is currently located does not match the target location information or the identity information of the user in the environment where the terminal apparatus C is currently located does not match the target identity information, the terminal apparatus C may maintain a previous state.

In addition, the terminal apparatus C may repeatedly perform the above steps at certain time intervals. For example, the terminal apparatus C may also be informed to repeatedly perform the above steps when there is a change in the electronic device(s) connected to the gateway. The gateway may notify the terminal apparatus C of a change when there is a change in the electronic device(s) connected to the gateway. Therefore, the control of the terminal apparatus C can respond more quickly to the change in the associated electronic device(s).

In yet another aspect, some embodiments of the present disclosure further provide a computer-readable storage medium. The computer-readable storage medium stores computer program instructions that, when run on a processor, cause the processor to perform one or more steps of the control method in any one of the above embodiments.

For example, the computer-readable storage medium may include, but is not limited to, a magnetic storage device (e.g., a hard disk, a floppy disk or a magnetic tape), an optical disk (e.g., a compact disk (CD) or a digital versatile disk (DVD)), a smart card and a flash memory device (e.g., an erasable programmable read-only memory (EPROM), a card, a stick or a key driver). Various computer-readable storage media described in the present disclosure may represent one or more devices and/or other machine-readable storage medium for storing information. The term "computer-readable storage medium" may include, but is not limited to, wireless channels and various other media capable of storing, containing and/or carrying instructions and/or data.

In yet another aspect, some embodiments of the present disclosure further provide a computer program product. The computer program product includes computer program instructions that, when executed by a computer, cause the computer to perform one or more steps of the control method in any one of the above embodiments.

In yet another aspect, some embodiments of the present disclosure further provide a computer program. When the computer program is executed by a computer, the computer program causes the computer to perform one or more steps of the control method in any one of the above embodiments.

The foregoing descriptions are merely specific implementations of the present disclosure, but the protection scope of the present disclosure is not limited thereto. Any changes or replacements that a person skilled in the art could conceive of within the technical scope of the present disclosure shall be included in the protection scope of the present disclosure. Therefore, the protection scope of the present disclosure shall be subject to the protection scope of the claims.

## Claims

1. A terminal apparatus, comprising:
a housing provided with at least one mounting cavity, the mounting cavity having at least one opening;
an image acquisition device disposed in the mounting cavity, wherein the image acquisition device is capable of being switched between a first state and a second state, the first state is a state in which the image acquisition device is exposed by an opening of the housing, and the second state is a state in which the image acquisition device is shielded by the housing;
an audio device disposed in the mounting cavity, wherein the audio device is capable of being switched between a third state and a fourth state, the third state is a state in which the audio device is exposed by the opening, and the fourth state is a state in which the audio device is shielded by the housing; and
a state switching device configured to switch the image acquisition device to the first state or the second state, and to switch the audio device to the third state or the fourth state.

2. The terminal apparatus according to claim 1, wherein the housing includes a base and a shielding housing, the at least one mounting cavity includes a first mounting cavity enclosed by the base and the shielding housing, and the at least one opening includes a first opening disposed in the shielding housing;
the terminal apparatus further comprises:
a rotation housing disposed in the first mounting cavity and rotationally connected to the base, wherein the rotation housing is provided with a first sub-cavity, and the image acquisition device is fixed in the first sub-cavity; the rotation housing is provided therein with an image acquisition window, and the image acquisition window exposes a photosensitive surface of the image acquisition device;
the first state is a state in which the image acquisition window is exposed by the first opening, and the second state is a state in which the image acquisition window is shielded by the shielding housing; and
the state switching device includes a first driving member, and the first driving member is configured to control the rotation housing to rotate, so that the image acquisition window and the first opening are staggered or overlap.

3. The terminal apparatus according to claim 2, wherein the audio device is fixed in the first sub-cavity, the rotation housing is further provided therein with an audio window, and the audio window exposes the audio device;
the third state is a state in which the audio window is exposed by the first opening, and the fourth state is a state in which the audio window is shielded by the shielding housing; and
the state switching device further includes a second driving member, and the second driving member is configured to drive the rotation housing to rotate, so that the audio window and the first opening are staggered or overlap.

4. The terminal apparatus according to claim 3, wherein the first driving member and the second driving member are the same driving member.

5. The terminal apparatus according to claim 2, wherein the at least one mounting cavity includes a second mounting cavity provided in the base, and the audio device is disposed in the second mounting cavity; the base is provided therein with an audio window, and the audio window exposes the audio device; and
the at least one opening includes at least one second opening provided in the shielding housing; the third state is a state in which the audio window is exposed by the second opening; and the fourth state is a state in which the audio window is shielded by the housing.

6. The terminal apparatus according to claim 5, wherein the base includes a foundation base and a support base disposed on the foundation base; the rotation housing is rotationally connected to the support base, and the support base is rotationally connected to the foundation base;
the second mounting cavity includes a second sub-cavity provided in the foundation base, the audio device is disposed in the second sub-cavity, and the audio window is disposed on the foundation base;
the state switching device includes a third driving member, and the third driving member is configured to drive the foundation base to rotate, so that the audio window and the second opening are staggered or overlap.

7. The terminal apparatus according to claim 5, wherein the housing further includes a baffle disposed on the base, the baffle is movably connected to the base;
the state switching device includes a fourth driving member, and the fourth driving member is configured to drive the baffle to move or rotate, so that the audio window is opened or closed.

8. The terminal apparatus according to any one of claims 2 to 7, wherein the first driving member includes a first rotating shaft and a driving part that are rotatable relative to each other, the driving part is fixedly connected to the rotation housing, the first rotating shaft is fixedly connected to the base, and the driving part is capable of driving the rotation housing to rotate around the first rotating shaft.

9. The terminal apparatus according to claim 8, wherein the driving part is fixed in the rotation housing;
the rotation housing is provided therein with a first through hole, and the base is provided therein with a second through hole; an end of the first rotating shaft is connected to the driving part in the rotation housing, and another end of the first rotating shaft passes through the first through hole and is fixed in the second through hole; and the first rotating shaft has a clearance fit with the first through hole.

10. The terminal apparatus according to claim 9, wherein the first rotating shaft includes a first sub-shaft and a second sub-shaft that are connected to each other;
an end of the first sub-shaft is connected to the driving part, another end of the first sub-shaft passes through the first through hole and is connected to the second sub-shaft, and the second sub-shaft is fixed in the second through hole; and
sections of the first sub-shaft and the first through hole are approximately in a shape of a circle, and/or sections of the second sub-shaft and the second through hole are approximately in a shape of a polygon.

11. The terminal apparatus according to any one of claims 3 to 10, wherein the audio device includes a microphone, and a sound gain of the microphone in a direction pointing from the microphone to the audio window is greater than sound gains in other directions.

12. The terminal apparatus according to any one of claims 2 to 11, further comprising:
a second rotating shaft fixedly connected to the rotation housing, the second rotating shaft being coaxially arranged with an axis of rotation of the rotation housing; wherein
the base is further provided therein with a limiting opening; the second rotating shaft is located in the limiting opening and is capable of rotating relative to the limiting opening; and the limiting opening is configured to prevent the second rotating shaft from moving in at least one direction parallel to a reference plane, the reference plane being a plane perpendicular to an axis of the second rotating shaft.

13. The terminal apparatus according to claim 12, wherein the limiting opening is in a shape of a circle or a bow.

14. The terminal apparatus according to any one of claims 2 to 13, further comprising:
a protrusion block disposed on the rotation housing, wherein
the base further includes a limiting part, and the limiting part cooperates with the protrusion block so that the rotation housing rotates within a preset angle range.

15. The terminal apparatus according to claim 14, wherein the limiting part is a curved slideway, and the protrusion block is slidably disposed in the curved slideway.

16. The terminal apparatus according to any one of claims 1 to 15, wherein the state switching device further includes a processor coupled to the image acquisition device and the audio device; and the processor is configured to: control the audio device to be switched to the third state when the image acquisition device is in the first state, and control the audio device to be switched to the fourth state when the image acquisition device is in the second state.

17. The terminal apparatus according to claim 16, further comprising:
a circuit board, wherein the processor is disposed on the circuit board; and the circuit board includes at least one of a memory, a communication module or a power module.

18. The terminal apparatus according to claim 17, wherein the image acquisition device and/or the audio device are disposed on the circuit board.

19. The terminal apparatus according to claim 1, wherein the audio device includes a microphone and/or a speaker.

20. The terminal apparatus according to claims 1 to 19, wherein in the first state, the image acquisition device works to capture external images, and in the second state, the image acquisition device stops working to stop capturing external images; and/or
in the third state, the audio device works to receive external sounds or transmit sounds to an outside, and in the fourth state, the audio device stops working to stop receiving external sounds or stop transmitting sounds to the outside.

21. A state control method for a terminal apparatus, the state control method comprising:
obtaining state influence information of the terminal apparatus;
determining whether the state influence information satisfies a preset condition; and
based on the state influence information satisfying the preset condition, controlling an image acquisition device in the terminal apparatus to be switched from a first state to a second state, and/or controlling an audio device in the terminal apparatus to be switched from a third state to a fourth state.

22. The state control method according to claim 21, wherein the state influence information includes: a first device list and a second device list, the first device list is used to record identifications of electronic devices associated with the terminal apparatus, the second device list is used to record an identification of an electronic device currently connected to a reference device, and the reference device includes at least one of a gateway, a router, a relay, or a server;
the preset condition includes that at least one electronic device among the electronic devices associated with the terminal apparatus is connected to the reference device;
determining whether the state influence information satisfies the preset condition includes: determining, according to the first device list and the second device list, whether at least one electronic device among the electronic devices associated with the terminal apparatus is connected to the reference device.

23. The state control method according to claim 21, wherein the state influence information includes: image information and/or sound information of an environment where the terminal apparatus is currently located;
the preset condition includes that a user exists in the environment where the terminal apparatus is currently located;
determining whether the state influence information satisfies the preset condition includes: determining, according to the image information and/or the sound information of the environment where the terminal apparatus is currently located, whether the image information includes image information of a user and/or the sound information includes sound information of a user; and if the image information includes image information of a user and/or the sound information includes sound information of a user, determining that a user exists in the environment where the terminal apparatus is currently located.

24. The state control method according to claim 23, wherein the state influence information includes: image information of the environment where the terminal apparatus is currently located;
controlling the image acquisition device in the terminal apparatus to be switched from the first state to the second state and/or controlling the audio device in the terminal apparatus to be switched from the third state to the fourth state includes:
controlling the image acquisition device to be switched from the first state to the second state;
based on receiving a user instruction within a first preset time, controlling the audio device to maintain the third state, the user instruction being an instruction of the user to instruct the terminal apparatus not to enable a sound masking function; and
based on receiving no user instruction received within the first preset time, controlling the audio device to be switched from the third state to the fourth state.

25. The state control method according to claim 21, wherein the state influence information includes: user information in the environment where the terminal apparatus is currently located, and the user information includes location information and/or identity information;
the preset condition includes that the user information matches target information, and the target information includes target location information and/or preset identity information;
determining whether the state influence information satisfies the preset condition includes: determining whether the location information is the same as the target location information and/or the identity information is the same as the preset identity information; and if the location information is the same as the target location information and/or the identity information is the same as the preset identity information, determining that the user information matches the target information.

26. The state control method according to any one of claims 21 to 25, further comprising:
based on the state influence information not satisfying the preset condition, re-obtaining the state influence information of the terminal apparatus after an interval of a second preset time.

27. A control system for a terminal apparatus, the control system comprising:
the terminal apparatus according to any one of claims 1 to 20; and
a server coupled to the terminal apparatus; and
a mobile device coupled to the server.

28. A computer-readable storage medium having stored thereon computer program instructions that, when run on a processor, cause the processor to perform one or more steps of the state control method according to any one of claims 21 to 26.
